# EUROPÄISCHE PATENTSCHRIFT

(11) **EP 2 738 033 B1**
(45) Veröffentlichungstag und Bekanntmachung des Hinweises auf die Patenterteilung: **18.10.2017**
(21) Anmeldenummer: 12195073.7
(22) Anmeldetag: 30.11.2012
(51) Int. Cl.: B60L 3/00, B60L 3/04, B60L 11/18, H01M 10/42, H01M 10/48, H01M 10/6568, H01M 10/63, H01M 10/625

(54) **Sicherheitsvorrichtung für ein Fahrzeug und Verfahren zur Steuerung dazu**
Safety device for a vehicle and method for controlling thereof
Dispositif de sécurité pour un véhicule et procédé de commande correspondant

(43) Veröffentlichungstag der Anmeldung: 04.06.2014
(73) Patentinhaber: Samsung SDI Co., Ltd., Yongin-si, Gyeonggi-do (KR)
(72) Erfinder: Dämon, Peter, 8301 Laßnitzhöhe (AT); Trathnigg, Thomas, 8010 Graz (AT)
(74) Vertreter: Gulde & Partner

(56) Entgegenhaltungen:
- WO-A1-2010/028692
- WO-A2-2012/030455
- US-A1- 2007 013 382
- US-A1- 2011 049 977

## Beschreibung

### Gebiet der Erfindung

Die vorliegende Erfindung betrifft eine Sicherheitsvorrichtung für ein Fahrzeug, sowie ein Verfahren zur Steuerung der erfindungsgemäßen Vorrichtung.

### Stand der Technik

Eine Vorrichtung der gattungsgemäßen Art ist aus der DE 10 2010 051 002 A1 bekannt, in der eine Hochvoltbatterie offenbart wird welche ein Gehäuse und im Gehäuse angeordnete Mittel zur Führung eines Kühlmediums aufweist. Eine Ventileinrichtung zum Beeinflussen der Strömung des Kühlmediums ist dabei im Inneren des Gehäuses angeordnet. Die Ventileinrichtung ist über einen magnetischen oder einen mechanischen Antrieb stellbar.

Ein Verfahren der gattungsgemäßen Art ist aus der DE 10 2011 116 968 A1 bekannt, um das Vorhandensein eines Kühlmittellecks zu bestimmen. Demnach werden Kapazitäten der Batterie mit Bezug auf einen Entladestrom ermittelt und miteinander verglichen, wodurch auf einen Kühlmittelverlust rückgeschlossen wird.

Die bekannten Lösungen geben keinen Hinweis darüber, was im Falle eines Kühlmittellecks über die bloße Information und Anzeige hinaus geschehen soll. Bei Verwendung eines elektrisch leitfähigen Kühlmittels kann es zu Kurzschlüssen innerhalb des Batteriesystems kommen. Tritt ein hochspannungsführender Bestandteil des Batteriesystems mit der Kühlmittelleckage in Verbindung, so kommt es zu einer Elektrolyse des Kühlmittels, was mit einer starken Erwärmung und Dampfbildung innerhalb des Batteriesystems einhergeht. Das Batteriesystem kann durch derartige Effekte erheblich geschädigt werden.

Die US 2011/0049977 A1 beschreibt ein elektrisches Fahrzeugbordnetz mit einem Batteriesystems einschließlich eines Busses, der konfiguriert ist Leistung an einen Motorantrieb zu übertragen sowie eine Steuerschaltung, um die Batterie mit dem Bus selektiv zu koppeln. Die Steuerschaltung entlädt die Kapazität des Busses an ein Chassis in Reaktion auf eine Trennung zwischen der Batterie und dem Bus. Ferner misst die Steuerschaltung die Impedanz über dem Bus. Als Ergebnis kann die Steuerschaltung die Integrität des Busses überwachen und einen Fehler, wie einen Kurzschluss oder degradierte Bus-Isolierung detektieren.
Auch eine Überwachung des Kühlsystems ist vorgesehen.

### Zusammenfassung der Erfindung

Es ist eine Aufgabe der Erfindung, Sicherheitsvorrichtungen für Fahrzeuge mit Batteriesystemen so zu verbessern, dass die Folgen eines Kühlmittelverlusts innerhalb des Batteriesystems reduziert werden.

Es ist eine weitere Aufgabe der Erfindung ein Verfahren der genannten Art anzugeben, das die Folgen eines Kühlmittelverlusts reduzieren kann.

Die Lösung der Aufgabe erfolgt durch eine Sicherheitsvorrichtung für ein Fahrzeug, umfassend ein Batteriesystem mit einer Vielzahl von Zellen, eine Elektronikeinheit, eine Einrichtung zur Erfassung eines Isolationswiderstands zwischen mit zumindest einer Zelle elektrisch leitend verbundenen Teilen des Batteriesystems und einem Bezugspotential, und eine Vorrichtung zum Zu- und/oder Abführen von Wärme von und/oder zu den Zellen mittels eines flüssigen Wärmeträgers sowie zumindest ein erstes Absperrventil, wobei der Wärmeträger in zumindest einem Kreislauf zirkulierbar ist, und wobei der Kreislauf durch das erste Absperrventil unterbrechbar ist, wobei die Elektronikeinheit dazu eingerichtet ist bei Erkennung einer Unterschreitung eines Grenzwerts des Isolationswiderstands eine Betätigung des ersten Absperrventils von einer Offen-Stellung in eine Sperr-Stellung zu bewirken.

Weiters erfolgt die Lösung durch ein Verfahren zur Steuerung einer Sicherheitsvorrichtung für ein Fahrzeug welches ein Batteriesystem umfasst umfassend die Schritte:
zumindest zeitweises Überprüfen des Isolationswiderstands zwischen mit zumindest einer Zelle elektrisch leitend verbundenen Teilen des Batteriesystems und einem Bezugspotential,
Auswertung des von der Vorrichtung zur Überprüfung des elektrischen Isolationswiderstands ermittelten elektrischen Isolationswiderstand mittels der Elektronikeinheit, und
Steuern des ersten Absperrventils anhand des Ergebnisses der Auswertung mittels der Elektronikeinheit.

Erfindungsgemäß wird also bei Erkennung eines Unterschreitens eines Grenzwerts vom Isolationswiderstand das Absperrventil so betätigt, dass es zu einer Unterbrechung des Kreislaufs kommt. Kommt es zu einer Leckage des Wärmeträgers, und ist dieser elektrisch leitfähig, so kann es durch die Leckage zu einer elektrisch leitenden Verbindung zwischen einem mit zumindest einer Zelle elektrisch leitend verbundenen Teil des Batteriesystems und einem davon galvanisch getrennten Bezugspotential kommen. Elektrisch leitend mit den Zellen verbundene Teile des Batteriesystems sind beispielsweise Zellverbinder, Zellgehäuse, mit den Zellpolen oder mit den Zellverbindern verbundene Zellspannungsabgriffe, sowie weitere Abschnitte eines Hochspannungsstromkreises. Durch die Zellspannungsabgriffe sind auch Bestandteile der Elektronikeinheit mit den Zellen elektrisch leitend verbunden.

Erfahrungsgemäß wird eine derartige elektrisch leitende Verbindung durch die Vorrichtung zur Erfassung des Isolationswiderstands sehr schnell erkannt. Durch die Unterbrechung des Kreislaufs durch das erste Absperrventil kann die Menge an austretendem Wärmeträger somit deutlich reduziert werden. Einer weiteren Schädigung des Batteriesystems wird dadurch effizient vorgebeugt.

Weiterbildungen der Erfindung sind in den abhängigen Ansprüchen, der Beschreibung sowie den beigefügten Zeichnungen angegeben.

Gemäß einer Ausführungsform der Erfindung handelt es sich bei dem Kreislauf um einen offenen Kreislauf mit einem Vorlauf-Anschluss und einem Rücklauf-Anschluss. Unter dem Begriff ,offenen Kreislauf' ist hierbei ein Kreislauf zu verstehen, der innerhalb des Batteriesystems nicht geschlossen ist. Demnach sind Abschnitte des vollständigen, geschlossenen Kreislaufs außerhalb des Batteriesystems angeordnet, beispielsweise eine Umwälzpumpe zum Zirkulieren des Wärmeträgers oder ein Wärmetauscher zum Zu- und/oder Abführen von Wärme aus dem Wärmeträger an die Umgebung, oder auch ein Reservoir des Wärmeträgers. Dementsprechend weist das Batteriesystem zumindest zwei Schnittstellen auf, an denen der Abschnitt des Kreislauf außerhalb des Batteriesystems mit dem Abschnitt innerhalb des Batteriesystems verbunden wird. Eine dieser Schnittstellen bildet den Vorlauf-Anschluss, die andere Schnittstelle den Rücklauf-Anschluss. Vorlauf-Anschluss und Rücklauf-Anschluss sind zumeist im äußeren Batteriegehäuse angeordnet. Alternativ dazu sind Vorlauf-Anschluss und Rücklauf-Anschluss Bestandteil eines Kühlkörpers, wobei in diesem Fall der Kühlkörper einen Abschnitt des äußeren Gehäuses bildet.

Kommt es zu einer Leckage des Wärmeträgers, so ist es zweckmäßig den Betrieb der Umwälzpumpe einzustellen, um zu vermeiden dass zusätzlich Wärmeträger zur Leckagestelle gefördert wird. Diese Funktionalität kann insbesondere bei einem Unfall nicht gewährleistet werden. Durch die Anordnung eines ersten Absperrventils zwischen Umwälzpumpe und den dem Batteriesystem zugeordneten Abschnitt des Kreislaufs wird eine Förderung von zusätzlichem Wärmeträger zur Leckagestelle mit Sicherheit unterbunden.

Bei geeigneter Ausbildung des gesamten Kreislaufs kann es dazu kommen, dass Wärmeträger aus dem Reservoir zur Leckagestelle in den dem Batteriesystem zugeordneten Abschnitt des Kreislaufs nachfließt. Durch die Anordnung eines ersten Absperrventils zwischen Reservoir und den dem Batteriesystem zugeordneten Abschnitt des Kreislaufs wird diesem Effekt entgegengewirkt.

Vorzugsweise ist im Kreislauf zwischen dem Vorlauf-Anschluss und dem Rücklauf-Anschluss ein erstes Absperrventil und ein zweites Absperrventil angeordnet. Durch diese Anordnung wird sichergestellt, dass bei einer Leckage innerhalb des Batteriesystems weder durch die Umwälzpumpe noch vom Reservoir Wärmeträger zur Leckagestelle nachfließen kann.

Gemäß einer weiteren Ausgestaltung der Erfindung ist das erste und/oder zweite Absperrventil innerhalb des dem Batteriesystem zugeordneten Abschnitts des Kreislaufs angeordnet. Dies ist insofern vorteilhaft, als dass die Einrichtung zur Erfassung des Isolationswiderstands ebenfalls Bestandteil des Batteriesystems ist. Dadurch wird die Montage des Batteriesystems wesentlich erleichtert, da beispielsweise keine gesonderten Leitungen zu außerhalb des Batteriesystems angeordneten Absperrventilen verlegt werden müssen. Zudem wird durch diese Anordnung die Sicherheit weiter verbessert, da die Kommunikation mit außerhalb des Batteriesystems angeordneten Absperrventilen im Falle eines Unfalls beeinträchtigt sein kann.

Sind Vorlauf-Anschluss und Rücklauf-Abschluss in unmittelbarer räumlicher Nähe zueinander angeordnet, ist es günstig wenn diese Absperrventile eine gemeinsame Betätigungseinrichtung aufweisen. Alternativ sind auch getrennte Betätigungseinrichtungen vorstellbar.

Gemäß einer weiteren Ausgestaltung der Erfindung ist das erste und zweite Absperrventil außerhalb eines Abschnitts des äußeren Gehäuses angeordnet. Kommt es zu einer Leckage an Vorlauf-Anschluss oder Rücklauf-Anschluss, so wird durch diese Anordnung verhindert dass Wärmeträger vom Abschnitt des Kreislaufs außerhalb des Batteriesystems in das Innere des Gehäuses gelangen kann.

Vorzugsweise umfasst die Vorrichtung zum Zu- und/oder Abführen von Wärme zumindest einen Kühlkörper mit einem Wärmeträger-Einlass sowie einem Wärmeträger-Auslass, wobei das erste Absperrventil im Bereich des Wärmeträger-Einlasses, und das zweite Absperrventil im Bereich des Wärmeträger-Auslasses angeordnet ist.

Sind Wärmeträger-Einlass und Wärmeträger-Auslass in räumlicher Nähe zueinander angeordnet sind, ist es vorteilhaft wenn das erste Absperrventil und das zweite Absperrventil eine gemeinsame Betätigungseinrichtung aufweisen. Alternativ dazu ist auch eine separate Betätigungseinrichtung für jedes Absperrventil denkbar.

Das Batteriesystem kann erfindungsgemäß auch mehrere Kühlkörper aufweisen, die im Kreislauf in Serie und /oder parallel angeordnet sind. Ein Kühlkörper und die ihm zugeordneten Zellen werden auch als Batteriemodul bezeichnet. Ein Batteriemodul bildet somit eine bauliche Untereinheit eines Batteriesystems.

Umfasst das Batteriesystem mehr als ein Batteriemodul, und damit mehr als einen Kühlkörper, so ist es vorteilhaft dass nicht an jedem Kühlkörper ein erstes und/oder zweites Absperrventil angeordnet ist. Das Absperrventil muss über die Lebensdauer des Batteriesystems mit Sicherheit seine Funktionalität erfüllen, und ist dementsprechend auszulegen. Besonders bei einer hohen Anzahl an Batteriemodulen würde eine Anordnung von Absperrventilen an jedem Batteriemodul die Kosten des Batteriesystems deutlich erhöhen. Infolgedessen ist es zweckmäßig Vorkehrungen zu treffen, durch die eine Leckage einer vorbestimmten Menge an Wärmeträger die Sicherheit des Batteriesystems nicht beeinflusst. Beispielsweise können im Batteriesystem Vorrichtungen zur Absorption oder Ableitung von ausgetretenem Wärmeträger vorgesehen sein. Dadurch kann die Anzahl an erforderlichen Absperrventilen reduziert werden. Für besonders sicherheitskritische Anwendungen, beispielsweise für Minenfahrzeuge im Untertage-Bau oder für Schienenfahrzeuge können zur Erhöhung der Sicherheit auch an jedem Kühlkörper Absperrventile angeordnet sein.

Vorzugsweise weist das, bzw. die Absperrventile eine elektromagnetische Betätigungseinrichtung auf, die so aufgebaut ist das das Absperrventil selbsttätig eine Sperr-Stellung einnimmt sobald der im Mittel durch die elektromagnetische Betätigungseinrichtung fließende Strom einen Grenzwert unterschreitet. Das selbsttätige Einnehmen der Sperr-Stellung kann beispielsweise durch eine Feder geschehen, die einen Anker der elektromagnetischen Betätigungseinrichtung in Richtung einer Sperr-Stellung drückt. Dementsprechend ist zum Aufrechterhalten einer Offen-Stellung des Absperrventils eine Bestromung der elektromagnetischen Betätigungseinrichtung erforderlich. Bevorzugt erfolgt dies in Form einer pulsweiten-modulierten Bestromung, da derart die Leistungsaufnahme der elektromagnetischen Betätigungseinrichtung reduziert wird. Durch diese Ausgestaltung wird eine Eigensicherheit erreicht, so dass auch bei einer Fehlfunktion der Elektronikeinheit das Absperrventil die Sperr-Stellung einnimmt.

Gemäß einer weiteren Ausgestaltung der Erfindung ist die Einrichtung zur Erfassung des Isolationswiderstands ein Bestandteil der Elektronikeinheit. Die Elektronikeinheit ist dazu eingerichtet Parameter wie Spannung und Lade-/Entlade-Strom im Hochspannungsstromkreis zu erfassen und auszuwerten. Zum Zwecke der Kommunikation mit anderen Systemen des Fahrzeugs weist die Elektronikeinrichtung auch Anschlüsse mit einem vom Hochspannungskreis des Batteriesystems galvanisch getrennten Bezugspotential auf, beispielsweise das Masse-Potential des Fahrzeugs. Durch Integration der Einrichtung zur Erfassung des elektrischen Isolationswiderstands in die Elektronikeinheit wird das Batteriesystem daher vereinfacht, da die zu vergleichenden Potentiale innerhalb eines Bestandteils des Batteriesystems in räumlicher Nähe zur Verfügung stehen.

Vorzugsweise wird ein Wasser-Glykol-Gemisch als Wärmeträger verwendet. Wasser-Glykol-Gemische sind gut wärmeleitfähig und im Automobilbau eine gängige Basis für flüssige Wärmeträger, beispielsweise für das Kühlsystem einer Verbrennungskraftmaschine. Durch die Verwendung eines derart verbreiteten Wärmeträgers können vor allem die Instandhaltungskosten des Fahrzeugs reduziert werden.

Gemäß einer Ausführungsform der Erfindung ist ein Verfahren zur Steuerung des Batteriesystems vorgesehen, dass folgende Schritte umfasst: zumindest zeitweises Überprüfen des Isolationswiderstands zwischen mit zumindest einer Zelle elektrisch leitend verbundenen Teilen des Batteriesystems und einem Bezugspotential, Auswertung des von der Vorrichtung zur Überprüfung des Isolationswiderstands ermittelten Isolationswiderstands mittels der Elektronikeinheit, und Steuern des ersten und/oder zweiten Absperrventils anhand des Ergebnisses der Auswertung mittels der Elektronikeinheit.
Unter 'zeitweiser' Überprüfung des Isolationswiderstands ist hierbei eine regelmäßige Überprüfung mit einer Zykluszeit von etwa 100 ms zu verstehen. Durch diese zeitweise Überprüfung ist gewährleistet, dass eine Reduktion des Isolationswiderstands sehr schnell erkannt wird.

Vorzugsweise umfasst das Verfahren zusätzlich das Steuern des ersten und/oder zweiten Absperrventils so, dass es in eine Sperr-Stellung gebracht wird falls die Auswertung des Isolationswiderstands eine Unterschreitung eines Grenzwerts des Isolationswiderstands feststellt.

Eine Unterschreitung des Grenzwerts des Isolationswiderstands kann verschiedene Ursachen haben, und muss nicht zwangsläufig durch Leckage des Wärmeträgers begründet sein. Bei Unterschreitung des besagten Grenzwerts ist es jedenfalls üblich, die elektrische Verbindung des Batteriesystems mit dessen Verbrauchern durch geeignete Mittel zu trennen. Dadurch wird der Stromkreis zwischen Verbraucher und Batteriesystem unterbrochen. Somit stellt eine Unterbrechung des Kreislaufs keine wesentliche Betriebs-Einschränkung dar, da die Zellen mangels Stromdurchfluss zum oder vom Verbraucher keine weitere Wärme mehr abgeben.

Versuche haben gezeigt, dass geringste Mengen an austretenden Wärmeträger ausreichen um den Isolationswiderstand erheblich zu reduzieren. Auch wenn es lediglich zu einer Tropfenbildung an einer Schnittstelle innerhalb des Kreislaufs kommt, und die Tropfen zunächst nur an einer Stelle zu liegen kommen wodurch unmittelbar kein Isolationsfehler verursacht wird, kann in weiterer Folge durch die elektrische Leitfähigkeit des Wärmeträgers eine Kriechstrecke ausgebildet werden. Beispielsweise können an einem Wärmeträger-Einlass des Kühlkörpers austretende Tropfen des Wärmeträgers in Spalte zwischen Kühlkörper und Zellen gelangen. Dadurch kann eine Kriechstrecke zwischen dem metallischen Gehäuse einer Zelle und dem Kühlkörper gebildet werden, was zu einem geringfügigen Leckstrom führt. Dieser Leckstrom setzt den Isolationswiderstand herab, und ist somit durch die Einrichtung zur Erfassung des Isolationswiderstands detektierbar.

Die Erfindung wird im Folgenden beispielhaft unter Bezugnahme auf die Zeichnungen beschrieben.
- Fig. 1: ist eine Ansicht einer ersten Ausführungsform der erfindungsgemäßen Vorrichtung.
- Fig. 2: ist eine Ansicht einer zweiten Ausführungsform der erfindungsgemäßen Vorrichtung.
- Fig. 3: ist eine Ansicht einer dritten Ausführungsform der erfindungsgemäßen Vorrichtung.
- Fig. 4: ist eine Ansicht eines erfindungsgemäßen Verfahrens

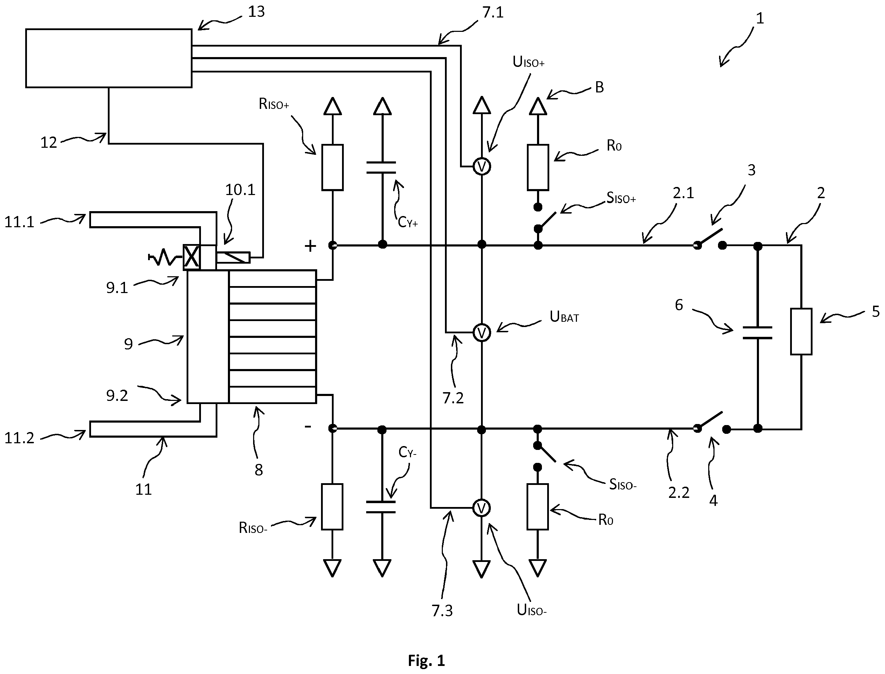

In der Fig. 1 ist eine erste Ausführungsform der erfindungsgemäßen Vorrichtung 1 dargestellt. Eine Vielzahl von in Serie und/oder parallel verschalteten Zellen 8 ist über einen Hochspannungsstromkreis 2 mit einem Lastwiderstand 5 und einer Lastkapazität 6 elektrisch leitend verbunden. Der Hochspannungsstromkreis 2 weist einen positiven Pfad 2.1 und einen negativen Pfad 2.2 auf. Im positiven Pfad 2.1 ist eine erste Trenneinrichtung 3 angeordnet, und im negativen Pfad 2.2 eine zweite Trenneinrichtung 4. Durch die erste und/oder zweite Trenneinrichtungen 3, 4 kann der Hochspannungsstromkreis 2 getrennt werden.

Die Zellen 8 sind mit einem Kühlkörper 9 thermisch gut leitend verbunden. Der Kühlkörper 9 wird von einem flüssigen Wärmeträger durchströmt, und ist so Bestandteil eines Kreislaufs 11. Der Kreislauf 11 ist hier als offener Kreislauf dargestellt. Einige Bestandteile des Kreislaufs 11 sind daher in der Figur der Einfachheit halber nicht abgebildet, darunter beispielsweise eine Umwälzpumpe zum Zirkulieren des Wärmeträgers oder ein Wärmetauscher zum Zu- und/oder Abführen von Wärme aus dem Wärmeträger an die Umgebung, oder auch ein Reservoir des Wärmeträgers. Diese Bestandteile sind bevorzugt außerhalb des Batteriesystems angeordnet, können aber auch innerhalb des Batteriesystems angeordnet sein. Das Batteriesystem weist zum Anschluss der außerhalb des Batteriesystems angeordneten Bestandteile des Kreislaufs 11 einen Vorlauf-Anschluss 11.1 und einen Rücklauf-Anschluss 11.2 auf. Ebenso weist der Kühlkörper 9 einen Wärmeträger-Einlass 9.1 und einen Wärmeträger-Auslass 9.2 auf.

Zwischen dem Wärmeträger-Einlass 9.1 und dem Vorlauf-Anschluss 11.1 des Kreislaufs 11 ist ein erstes Absperrventil 10.1 angeordnet. Alternativ dazu kann das erste Absperrventil 10.1 auch zwischen dem Wärmeträger-Auslass 9.2 und dem Rücklauf-Anschluss 11.2 angeordnet sein, oder an einer anderen Stelle im Kreislauf 11 zwischen Vorlauf-Anschluss 11.1 und Rücklaufanschluss 11.2. Das erste Absperrventil 10.1 weist zwei Betriebsstellungen auf, nämlich eine Sperr-Stellung und eine Offen-Stellung. In der Sperr-Stellung wird der Kreislauf 11 durch das erste Absperrventil 10.1 unterbrochen, so dass der Wärmeträger nicht durch das erste Absperrventil 10.1 strömen kann. In der Offen-Stellung kann Wärmeträger durch das erste Absperrventil 10.1 strömen. Das erste Absperrventil 10.1 ist elektromagentisch betätigt, wobei der Elektromagnet gegen eine Feder wirkt. Durch die Feder nimmt das erste Absperrventil 10.1 selbsttätig die Sperr-Stellung ein, sofern der durch den Elektromagnet fließende Strom die Kraft der Feder nicht überwindet. Soll das erste Absperrventil 10.1 die Offen-Stellung einnehmen, so muss der Elektromagnet daher mit ausreichend elektrischer Leistung beaufschlagt werden. Alternativ dazu ist auch denkbar das erste Absperrventil 10.1 so zu gestalten, dass es durch die Federkraft die Offen-Stellung einnimmt sofern der Elektromagnet nicht ausreichend bestromt wird.

In Fig. 1 ist eine Darstellung gezeigt, in der sich das erste Absperrventil 10.1 in der Offen-Stellung befindet.

Im folgenden wird die Einrichtung zur Erfassung des elektrischen Isolationswiderstands zwischen mit zumindest einer Zelle 8 elektrisch leitend verbundenen Teilen des Batteriesystems und einem von den Zellen 8 galvanisch getrennten Bezugspotential B beschrieben Der positive Pfad 2.1 und der negative Pfad 2.2 des Hochspannungsstromkreises 2 sind über die erste Trenneinrichtung 3 und die zweite Trenneinrichtung 4 mit dem Lastwiderstand 5 elektrisch leitend verbunden. Der positive Pfad 2.1 weist gegenüber einem von diesem galvanisch getrennten Bezugspotential B, beispielsweise das Masse-Potential des Fahrzeugs, einen ersten Isolationswiderstand R_{ISO+} sowie eine erste (parasitäre) Kapazität C_{Y+} auf. Der negative Pfad 2.2 weist ebenso gegenüber dem von diesem galvanisch getrennten Bezugspotential B, beispielsweise das Masse-Potential des Fahrzeugs, einen zweiten Isolationswiderstand R_{ISO-} sowie eine zweite (parasitäre) Kapazität C_{Y-} auf. Ein Referenzwiderstand R₀ mit bekanntem Widerstandswert ist über einen ersten Schalter S_{ISO+} und einen zweiten Schalter S_{ISO-} wahlweise an den positiven Pfad 2.1 oder den negativen Pfad 2.2 des Hochspannungsstromkreises 2 schaltbar. Der erste Schalter und der zweite Schalter S_{ISO+} und S_{ISO-} sind beispielsweise als Transistoren ausgeführt und so von einer Steuereinrichtung her schaltbar. Die Steuereinrichtung kann beispielsweise eine Elektronikeinheit 13 sein. Die Leitungen zum Steuern des ersten und zweiten Schalters S_{ISO+} und S_{ISO-} sind der Übersichtlichkeit halber nicht dargestellt. Über eine erste Spannungsmessung U_{ISO+} wird die zwischen dem positiven Pfad 2.1 und dem Bezugspotential B anliegende Spannung gemessen. Mit einer zweiten Spannungsmessung U_{ISO-} wird die zwischen dem negativen Pfad 2.2 und dem Bezugspotential B anliegende Spannung gemessen. Mit einer dritten Spannungsmessung U_{BAT} wird die zwischen dem positiven Pfad 2.1 und dem negativen Pfad 2.2 anliegende Spannung gemessen.

Um einen Isolationswiderstand R_{ISO} zu bestimmen wird der bekannte Referenzwiderstand R₀ abwechselnd parallel zum ersten Isolationswiderstand R_{ISO+} und dem zweiten Isolationswiderstand R_{ISO-} geschaltet. Nachdem die erste Kapazität C_{Y+} und die zweite Kapazität C_{Y-} umgeladen wurden, wird durch die erste Spannungsmessung U_{ISO+} die zwischen dem positiven Pfad 2.1 und dem Bezugspotential B anliegende Spannung gemessen, sowie durch die zweite Spannungsmessung U_{ISO-} die zwischen dem negativen Pfad 2.2 und dem Bezugspotential B anliegende Spannung. Nachdem der Referenzwiderstand R₀ einmal auf den positiven Pfad 2.1 und den negativen Pfad 2.2 geschaltet wurde, kann der Isolationswiderstand R_{ISO} berechnet werden. Der Isolationswiderstand R_{ISO} ergibt sich aus der Parallelschaltung des ersten und zweiten Isolationswiderstands Riso+ und Riso-.

Von der ersten Spannungsmessung U_{ISO+} führt eine erste Signalleitung 7.1 zu einer Elektronikeinheit 13. Ebenso führt von der zweiten Spannungsmessung U_{ISO-} eine dritte Signalleitung 7.3, sowie von der dritten Spannungsmessung U_{BAT} eine zweite Signalleitung 7.2 zur Elektronikeinheit 13. Die Elektronikeinheit 13 ermittelt anhand der von den Signalleitungen 7.1, 7.2 und 7.3 übermittelten Signale den aktuellen Wert des Isolationswiderstands R_{ISO}, und vergleicht den aktuellen Wert mit einem Grenzwert R_{ISOmin}. Unterschreitet der aktuelle Wert des Isolationswiderstands R_{ISO} den Grenzwert R_{ISOmin}, so ist die Elektronikeinheit dazu eingerichtet ein Signal auszugeben, das eine Betätigung des ersten Absperrventils 10.1 von einer Offen-Stellung in eine Sperr-Stellung bewirkt.

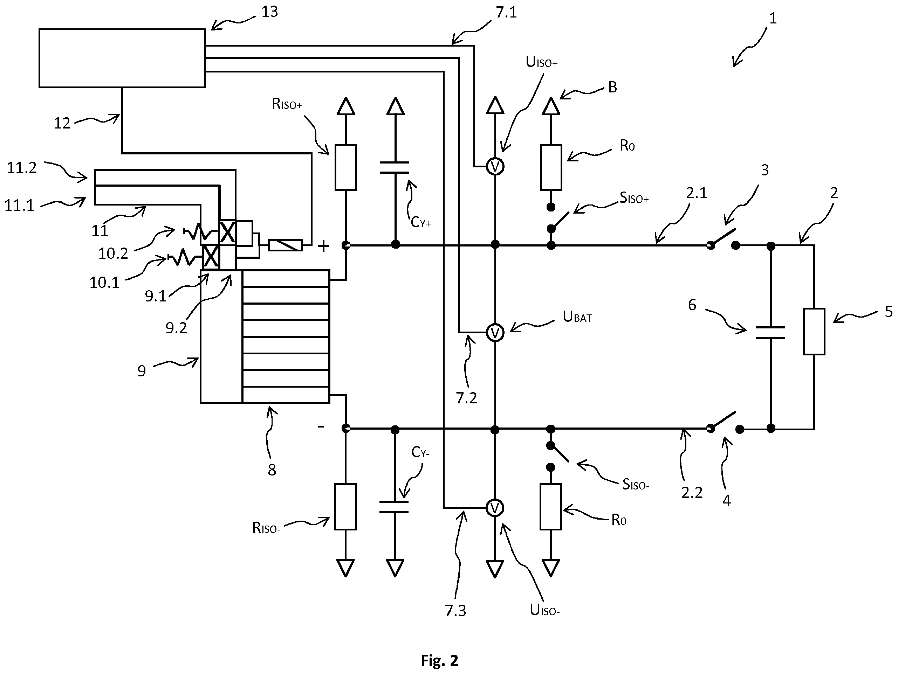

In der Fig. 2 ist eine zweite Ausführungsform der erfindungsgemäßen Vorrichtung 1 dargestellt. Im Vergleich zur ersten Ausführungsform sind hierbei ein erstes Absperrventil 10.1 und ein zweites Absperrventil 10.2 vorgesehen. Das erste Absperrventil 10.1 ist zwischen Vorlauf-Anschluss 11.1 und dem Wärmeträger-Einlass 9.1 des Kühlkörpers 9 angeordnet, das zweite Absperrventil 10.2 zwischen Rücklauf-Anschluss 11.2 und dem Wärmeträger-Auslass 9.2. Sowohl das erste Absperrventil 10.1 als auch das zweite Absperrventil 10.2 sind in der Fig. 2 in der Sperr-Stellung dargestellt. Der Kühlkörper 9 ist so aufgebaut, dass der Wärmeträger-Einlass 9.1 und der Wärmeträger-Auslass 9.2 in räumlicher Nähe zueinander angeordnet sind. Insbesondere befinden sich Wärmeträger-Einlass 9.1 und Wärmeträger-Auslass 9.2 an einem Ende des Kühlkörpers 9. Erstes und zweites Absperrventil 10.1, 10.2 weisen eine gemeinsame Betätigungseinrichtung in Form eines Elektromagneten auf. Alternativ dazu ist auch eine Ausführung mit getrennten Betätigungseinrichtungen denkbar, oder auch eine Ausführung mit Wärmeträger-Einlass 9.1 und Wärmeträger-Auslass 9.2 an gegenüberliegenden Enden des Kühlkörpers 9.

Erstes und zweites Absperrventil 10.1, 10.2 sind dabei im Bereich des Wärmeträger-Einlasses 9.1, bzw. Wärmeträger-Auslasses 9.2 angeordnet. Der Begriff 'im Bereich' ist dabei so zu verstehen, dass das erste und zweite Absperrventil 10.1, 10.2 so nahe zum Wärmeträger-Einlasses 9.1, bzw. Wärmeträger-Auslasses 9.2 angeordnet sind, dass diese direkt am Kühlkörper 9, oder an der entsprechenden Schnittstelle des Kreislaufs 11 zum Kühlkörper 9 befestigt werden können. Dazu kann beispielsweise ein entsprechender Flansch am Kühlkörper 9 vorgesehen sein, oder auch eine Klemmung zwischen ersten und zweiten Absperrventil 10.1, 10.2 und dem Kühlkörper 9.

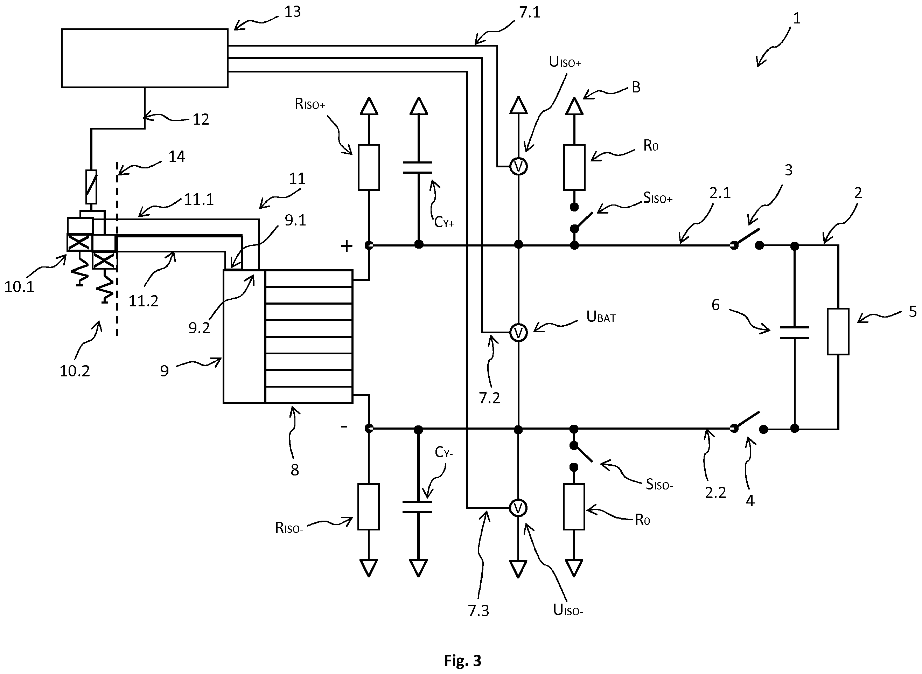

In der Fig. 3 ist eine dritte Ausführungsform der erfindungsgemäßen Vorrichtung 1 dargestellt. Dabei ist das erste Absperrventil 10.1 im Bereich des Vorlauf-Abschlusses 11.2, und das zweite Absperrventil 10.2 im Bereich des Rücklauf-Anschlusses 11.2 angeordnet. Sowohl das erste Absperrventil 10.1 als auch das zweite Absperrventil 10.2 sind in der Offen-Stellung dargestellt. Der Begriff ,im Bereich' ist dabei so zu verstehen, dass das erste und zweite Absperrventil 10.1, 10.2 so nahe zum Vorlauf-Anschluss 11.1, bzw. Rücklauf-Anschluss 11.2 angeordnet sind, dass diese direkt an der entsprechenden Schnittstelle des Kreislaufs 11 befestigt werden können.

Vorlauf-Anschluss 11.1 und Rücklauf-Anschluss 11.2 liegen in räumlicher Nähe zueinander. Erstes und zweites Absperrventil 10.1, 10.2 weisen eine gemeinsame Betätigungseinrichtung in Form eines Elektromagneten auf. Auch eine getrennte Anordnung des ersten und zweiten Absperrventils 10.1, 10.2 ist denkbar, ebenso getrennte Betätigungseinrichtungen.

Das erste und zweite Absperrventil 10.1, 10.2 ist dabei außerhalb eines Abschnitt des äußeren Gehäuses 14 angeordnet. Tritt eine Leckage im Bereich des Vorlauf-Anschlusses 11.1 oder im Bereich des Rücklaufanschlusses 11.2 auf, so wird durch diese Anordnung verhindert, dass Wärmeträger durch die Leckage ins Innere des äußeren Gehäuses 14 gelangt.

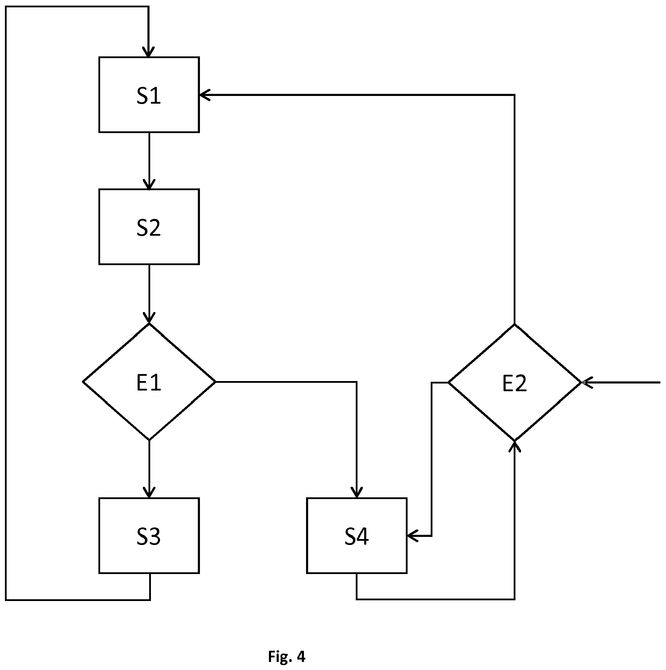

In der Fig. 4 ist eine Ausführungsform des erfindungsgemäßen Verfahrens dargestellt. In einem ersten Schritt S1 wird der Isolationswiderstand R_{ISO} gemessen. Diese Messung findet in regelmäßigen Zeitabständen statt, beispielsweise alle 100 ms. In einem zweiten Schritt S2 wird der in Schritt S1 ermittelte Isolationswiderstand R_{ISO} mit dem Grenzwert R_{ISOmin} verglichen. Der Vergleich ergibt entweder, dass der ermittelte Isolationswiderstand R_{ISO} größer oder kleiner als der Grenzwert R_{ISOmin} ist.

Der Betrag der Differenz zwischen Isolationswiderstand R_{ISO} und Grenzwert R_{ISOmin} bildet die Grundlage für die nun folgende Entscheidung E1. Ist der Isolationswiderstand R_{ISO} größer als der Grenzwert R_{ISOmin}, so wird ein dritter Schritt S3 eingeleitet. Darin wird ein erstes und/oder zweites Absperrventil 10.1, 10.2 so bestromt, dass es entweder die Offen-Stellung einnimmt oder diese beibehält. Anschließend kommt es erneut zum ersten Schritt S1.

Ist der Isolationswiderstand R_{ISO} geringer als der Grenzwert R_{ISOmin}, so wird ein vierter Schritt S4 eingeleitet. Darin wird das erste und/oder zweite Absperrventil 10.1, 10.2 so bestromt, dass es die Sperr-Stellung einnimmt oder diese beibehält. Ist das erste und/oder zweite Absperrventil 10.1, 10.2 so aufgebaut, dass es ohne Bestromung selbsttätig die Sperr-Stellung einnimmt, so wird eine bis dahin herrschende Bestromung abgebrochen.

Die Unterschreitung des Grenzwerts R_{ISOmin} kann verschiedene Ursachen haben; eine Leckage des Wärmeträgers ist nur eine mögliche Ursache. Um die Funktionsweise des Verfahrens auch nach Behebung der Ursache für die Unterschreitung des Grenzwerts R_{ISOmin} wiederherzustellen ist eine zweite Entscheidung E2 vorgesehen. Die zweite Entscheidung E2 kann von äußeren Parametern beeinflusst werden, beispielsweise durch eine Diagnose während eines Wartungs-Betriebs. Werden die entsprechenden äußeren Parameter nicht gesetzt, so verbleibt die Vorrichtung in dem im vierten Schritt S4 versetzten Zustand.

### Bezugszeichenliste

- 1: Sicherheitsvorrichtung
- 2: Hochspannungsstromkreis
- 2.1: Positiver Pfad
- 2.2: Negativer Pfad
- 3: Erste Trenneinrichtung
- 4: Zweite Trenneinrichtung
- 5: Lastwiderstand
- 6: Lastkapazität
- 7.1: Erste Signalleitung
- 7.2: Zweite Signalleitung
- 7.3: Dritte Signalleitung
- 8: Zellen
- 9: Kühlkörper
- 9.1: Wärmeträger-Einlass
- 9.2: Wärmeträger-Auslass
- 10.1: Erstes Absperrventil
- 10.2: Zweites Absperrventil
- 11: Kreislauf
- 11.1: Vorlauf-Anschluss
- 11.2: Rücklauf-Anschluss
- 12.1: Signalleitung des Absperrventils
- 13: Elektronikeinheit
- 14: Äußeres Gehäuses

- R₀: Messwiderstand
- S: Schließrichtung
- K2: Öffnungsrichtung
- S_{ISO+}: Erster Schalter
- S_{ISO-}: Zweiter Schalter
- U_{ISO+}: Erste Spannungsmessung
- U_{ISO+}: Zweite Spannungsmessung
- U_{BAT}: Dritte Spannungsmessung
- C_{Y+}: Erste Kapazität
- C_{Y-}: Zweite Kapazität
- Riso: Isolationswiderstand
- R_{ISO+}: Erster Isolationswiderstand
- Riso-: Zweiter Isolationswiderstand
- R_{ISOmin}: Grenzwert
- B: Bezugspotential

- S1: Erster Schritt
- S2: Zweiter Schritt
- S3: Dritter Schritt
- S4: Vierter Schritt
- E1: Erste Entscheidung
- E2: Zweite Entscheidung

## Patentansprüche

1. Sicherheitsvorrichtung (1) für ein Fahrzeug, umfassend ein Batteriesystem mit einer Vielzahl von Zellen (8), eine Elektronikeinheit (13), eine Einrichtung zur Erfassung eines Isolationswiderstands (R_{ISO}) zwischen mit zumindest einer Zelle (8) elektrisch leitend verbundenen Teilen des Batteriesystems und einem Bezugspotential (B), eine Vorrichtung zum Zu- und/oder Abführen von Wärme von und/oder zu den Zellen (8) mittels eines flüssigen Wärmeträgers, sowie zumindest ein erstes Absperrventil (10.1), wobei der Wärmeträger in zumindest einem Kreislauf (11) zirkulierbar ist, und wobei der Kreislauf (11) durch das erste Absperrventil (10.1) unterbrechbar ist, **dadurch gekennzeichnet, dass** die Elektronikeinheit (13) dazu eingerichtet ist, bei Erkennung einer Unterschreitung eines Grenzwerts (R_{ISOmin}) des Isolationswiderstands (R_{ISO}) eine Betätigung des ersten Absperrventils (10.1) von einer Offen-Stellung in eine Sperr-Stellung zu bewirken.

2. Sicherheitsvorrichtung (1) für ein Fahrzeug nach Anspruch 1, **dadurch gekennzeichnet, dass** es sich bei dem Kreislauf (11) um einen offenen Kreislauf mit einem Vorlauf-Anschluss (11.1) und einem Rücklauf-Anschluss (11.2) handelt, wobei zwischen Vorlauf-Anschluss (11.1) und einem Wärmeträger-Einlass (9.1 eines Kühlkörpers (9) das erste Absperrventil (10.1) und ein zweites Absperrventil (10.2) zwischen dem Rücklauf-Anschluss (11.2) und einem Wärmeträger-Auslass (9.2 des Kühlkörpers (9)angeordnet ist.

3. Sicherheitsvorrichtung (1) für ein Fahrzeug nach Anspruch 1, **dadurch gekennzeichnet, dass** das erste Absperrventil (10.1) und/ oder das zweite Absperrventil (10.2) innerhalb eines dem Batteriesystem zugeordneten Abschnitts des Kreislaufs (11) angeordnet ist.

4. Sicherheitsvorrichtung (1) für ein Fahrzeug nach Anspruch 2, **dadurch gekennzeichnet, dass** die Vorrichtung zum Zu- und/oder Abführen von Wärme einen Kühlkörper (9) mit einem Wärmeträger-Einlass (9.1) sowie einem Wärmeträger-Auslass (9.2) umfasst, wobei im Bereich des Wärmeträger-Einlasses (9.1) das erste Absperrventil (10.1), und im Bereich des Wärmeträger-Auslasses (9.2) das zweite Absperrventil (10.2) angeordnet ist.

5. Sicherheitsvorrichtung (1) für ein Fahrzeug nach Anspruch 2, **dadurch gekennzeichnet, dass** das erste Absperrventil (10.1) und das zweite Absperrventil (10.2) eine gemeinsame Betätigungseinrichtung aufweisen.

6. Sicherheitsvorrichtung (1) für ein Fahrzeug nach Anspruch 2, **dadurch gekennzeichnet, dass** das erste Absperrventil (10.1) im Bereich des Vorlauf-Anschlusses (11.1), und das zweite Absperrventil (10.2) im Bereich des Rücklauf-Anschlusses (11.2) angeordnet ist.

7. Sicherheitsvorrichtung (1) für ein Fahrzeug nach Anspruch 1, **dadurch gekennzeichnet, dass** das erste Absperrventil (10.1) und/oder das zweite Absperrventil (10.2) außerhalb eines Abschnitts des äußeren Gehäuses (14) angeordnet ist.

8. Sicherheitsvorrichtung (1) für ein Fahrzeug nach Anspruch 1, **dadurch gekennzeichnet, dass** das erste Absperrventil (10.1) und/ oder das zweite Absperrventil (10.2) eine elektromagnetische Betätigungseinrichtung aufweist, und einen Aufbau aufweist durch den das erste und/oder zweite Absperrventil (10.1, 10.2) selbsttätig eine Sperr-Stellung einnimmt, sobald der im Mittel durch die elektromagnetische Betätigungseinrichtung fließende Strom einen Grenzwert unterschreitet.

9. Sicherheitsvorrichtung (1) für ein Fahrzeug nach Anspruch 1, **dadurch gekennzeichnet, dass** die Einrichtung zur Erfassung des Isolationswiderstands ein Bestandteil der Elektronikeinheit (13) ist.

10. Sicherheitsvorrichtung (1) für ein Fahrzeug nach Anspruch 1, **dadurch gekennzeichnet, dass** der flüssige Wärmeträger ein Wasser-Glykol-Gemisch ist.

11. Verfahren zur Steuerung einer Sicherheitsvorrichtung (1) gemäß mindestens einem der vorhergehenden Ansprüche, **gekennzeichnet durch** die Schritte:
zumindest zeitweises Überprüfen des Isolationswiderstands (R_{ISO}) zwischen mit zumindest einer Zelle (8) elektrisch leitend verbundenen Teilen des Batteriesystems und dem Bezugspotential (B),
Auswertung des von der Vorrichtung zur Überprüfung des Isolationswiderstands ermittelten Isolationswiderstands (R_{ISO}) mittels der Elektronikeinheit (13), und
Steuern des ersten und/oder zweiten Absperrventils (10.1, 10.2) anhand des Ergebnisses der Auswertung mittels der Elektronikeinheit (13).

12. Verfahren zur Steuerung einer Sicherheitsvorrichtung (1) gemäß Anspruch 11, wobei das Steuern des ersten und/oder zweiten Absperrventils (10.1, 10.2) so erfolgt, dass das erste und/oder zweite Absperrventil (10.1, 10.2) in eine Sperr-Stellung gebracht wird falls die Auswertung des Isolationswiderstands (R_{ISO}) eine Unterschreitung eines Grenzwerts (R_{ISOmin}) des Isolationswiderstands (R_{ISO}) feststellt.

## Claims

1. Safety device (1) for a vehicle, comprising a battery system with a plurality of cells (8), an electronic unit (13), a device for detecting an insulation resistance (R_{ISO}) between parts of the battery system and a reference potential (B), which parts are connected in an electrically conductive manner to at least one cell (8), a device for supplying heat to and/or discharging heat from the cells (8) by means of a liquid heat transfer medium, and also at least a first cut-off valve (10.1), the heat transfer medium being able to circulate in at least one circular flow (11), and the circular flow (11) being able to be interrupted by the first cut-off valve (10.1),
**characterized in that** the electronic unit (13) is configured to bring about an actuation of the first cut-off valve (10.1) from an open position into a closed position if it is detected that the insulation resistance (R_{ISO}) is below a predetermined limit value.

2. Safety device (1) for a vehicle according to claim 1,
**characterized in that** the circular flow (11) is an open circular flow having a feed flow connection (11.1) and a return flow connection (11.2), the first cut-off valve (10.1) being arranged between feed flow connection (11.1) and a heat transfer medium inlet (9.1) of a cooling body (9) and a second cut-off valve (10.2) being arranged between the return flow connection (11.2) and a heat transfer medium outlet (9.2) of the cooling body (9).

3. Safety device (1) for a vehicle according to claim 1,
**characterized in that** the first cut-off valve (10.1) and/or the second cut-off valve (10.2) is arranged inside a section of the circular flow (11), which section is allocated to the battery system.

4. Safety device (1) for a vehicle according to claim 2,
**characterized in that** the device for supplying and/or discharging heat comprises a cooling body (9) having a heat transfer medium inlet (9.1) and a heat transfer medium outlet (9.2), the first cut-off valve (10.1) being arranged in the region of the heat transfer medium inlet (9.1), and the second cut-off valve (10.2) being arranged in the region of the heat transfer medium outlet (9.2).

5. Safety device (1) for a vehicle according to claim 2,
**characterized in that** the first cut-off valve (10.1) and the second cut-off valve (10.2) comprise a common actuating device.

6. Safety device (1) for a vehicle according to claim 2,
**characterized in that** the first cut-off valve (10.1) is arranged in the region of the feed flow connection (11.1), and the second cut-off valve (10.2) is arranged in the region of the return flow connection (11.2).

7. Safety device (1) for a vehicle according to claim 1,
**characterized in that** the first cut-off valve (10.1) and/or the second cut-off valve (10.2) is arranged outside a section of the outer housing (14).

8. Safety device (1) for a vehicle according to claim 1,
**characterized in that** the first cut-off valve (10.1) and/or the second cut-off valve (10.2) comprises an electromagnetic actuating device and is configured to automatically assume a closed position as soon as the mean current flowing through the electromagnetic actuating device is below a predetermined limit value.

9. Safety device (1) for a vehicle according to claim 1, **characterized in that** the device for detecting the insulation resistance is a component of the electronic unit (13).

10. Safety device (1) for a vehicle according to claim 1, **characterized in that** the liquid heat transfer medium is a water-glycol mixture.

11. Method for controlling a safety device (1) in accordance with at least one of the preceding claims,
**characterized by** the steps of:
at least intermittently checking the insulation resistance (R_{ISO}) between parts of the battery system and the reference potential (B), which parts are connected in an electrically conductive manner to at least one cell (8),
evaluating the insulation resistance (R_{ISO}) ascertained by the device for checking the insulation resistance (R_{ISO}) by means of the electronic unit (13), and
controlling the first and/or second cut-off valve (10.1, 10.2), using the result of the evaluation, by means of the electronic unit (13).

12. Method for controlling a safety device (1) in accordance with claim 11, the controlling of the first and/or second cut-off valve (10.1, 10.2) being carried out in such a manner that the first and/or second cut-off valve (10.1, 10.2) is brought into a closed position in the event that the evaluation of the insulation resistance (R_{ISO}) establishes that the insulation resistance (R_{ISO}) is below a limit value (R_{ISOmin})

## Revendications

1. Dispositif de sécurité (1) pour un véhicule, comprenant un système de batterie avec une pluralité de cellules (8), une unité électronique (13), un équipement pour saisir une résistance d'isolement (R_{ISO}) entre des parties du système de batterie reliées de manière électriquement conductrice à au moins une cellule (8) et un potentiel de référence (B), un dispositif pour amener et/ou évacuer de la chaleur depuis et/ou vers les cellules (8) au moyen d'un caloporteur fluide, ainsi qu'au moins une première soupape d'arrêt (10.1), dans lequel le caloporteur peut être amené à circuler dans au moins un circuit (11), et dans lequel le circuit (11) est interruptible par la première soupape d'arrêt (10.1), **caractérisé en ce que** l'unité électronique (13) est aménagée pour, lors de la détection d'un dépassement en-dessous d'une valeur-seuil (R_{ISOmin}) de la résistance d'isolement (R_{ISO}), actionner une commande de la première soupape d'arrêt (10.1) d'une position d'ouverture vers une position de blocage.

2. Dispositif de sécurité (1) pour un véhicule selon la revendication 1, **caractérisé en ce que** le circuit (11) est un circuit ouvert avec un raccord d'arrivée (11.1) et un raccord de retour (11.2), dans lequel entre le raccord d'arrivée (11.1) et une admission de caloporteur (9.1) d'un dissipateur thermique (9) est agencée la première soupape d'arrêt (10.1) et une seconde soupape d'arrêt (10.2) entre le raccord de retour (11.2) et une décharge de caloporteur (9.2) du dissipateur thermique (9).

3. Dispositif de sécurité (1) pour un véhicule selon la revendication 1, **caractérisé en ce que** la première soupape d'arrêt (10.1) et/ou la seconde soupape d'arrêt (10.2) est agencée à l'intérieur d' une partie d'un circuit (11) affectée au système de batterie.

4. Dispositif de sécurité (1) pour un véhicule selon la revendication 2, **caractérisé en ce que** le dispositif pour amener et/ou évacuer de la chaleur comprend un dissipateur thermique (9) avec une admission de caloporteur (9.1) ainsi qu'avec une décharge de caloporteur (9.2), dans lequel la première soupape d'arrêt (10.1) est agencée dans la région de l'admission de caloporteur (9.1) et la seconde soupape d'arrêt (10.2) est agencée dans la région de la décharge de caloporteur (9.2).

5. Dispositif de sécurité (1) pour un véhicule selon la revendication 2, **caractérisé en ce que** la première soupape d'arrêt (10.1) et la seconde soupape d'arrêt (10.2) présentent un équipement de commande commun.

6. Dispositif de sécurité (1) pour un véhicule selon la revendication 2, **caractérisé en ce que** la première soupape d'arrêt (10.1) est agencée dans la région du raccord d'arrivée (11.1) et la seconde soupape d'arrêt (10.2) est agencée dans la région du raccord de retour (11.2).

7. Dispositif de sécurité (1) pour un véhicule selon la revendication 1, **caractérisé en ce que** la première soupape d'arrêt (10.1) et/ou la seconde soupape d'arrêt (10.2) est agencée à l'extérieur d'une partie du boîtier externe (14).

8. Dispositif de sécurité (1) pour un véhicule selon la revendication 1, **caractérisé en ce que** la première soupape d'arrêt (10.1) et/ou la seconde soupape d'arrêt (10.2) présente un équipement de commande électromagnétique, et présente une structure à travers laquelle la première et/ou seconde soupape d'arrêt (10.1, 10.2) occupe automatiquement une position de blocage dès lors que le courant circulant en moyenne à travers l'équipement de commande électromagnétique passe en dessous d'une valeur-seuil.

9. Dispositif de sécurité (1) pour un véhicule selon la revendication 1, **caractérisé en ce que** l'équipement pour saisir la résistance d'isolement est une composante de l'unité électronique (13).

10. Dispositif de sécurité (1) pour un véhicule selon la revendication 1, **caractérisé en ce que** le caloporteur fluide est un mélange eau-glycol.

11. Procédé de commande d'un dispositif de sécurité (1) selon au moins l'une des revendications précédentes, **caractérisé par** les étapes de :
vérification au moins périodique de la résistance d'isolement (R_{ISO}) entre des parties du système de batterie reliées de manière électriquement conductrice à au moins une cellule (8) et le potentiel de référence (B),
évaluation de la résistance d'isolement (R_{ISO}) déterminée par le dispositif de vérification de la résistance d'isolement au moyen de l'unité électronique (13), et
pilotage de la première et/ou seconde soupape d'arrêt (10.1, 10.2) à l'aide du résultat de l'évaluation au moyen de l'unité électronique (13).

12. Procédé de commande d'un dispositif de sécurité (1) selon la revendication 11, dans lequel le pilotage de la première et/ou seconde soupape d'arrêt (10.1, 10.2) s'effectue de telle sorte que la première et/ou seconde soupape d'arrêt (10.1, 10.2) est amenée dans une position de blocage dans le cas où l'évaluation de la résistance d'isolement (R_{ISO}) constate un dépassement en-dessous d'une valeur-seuil (R_{ISOmin}) de la résistance d'isolement (R_{ISO}).
